# EUROPÄISCHE PATENTSCHRIFT

(11) **EP 0 959 234 B1**
(45) Veröffentlichungstag und Bekanntmachung des Hinweises auf die Patenterteilung: **02.04.2003**
(21) Anmeldenummer: 99109074.7
(22) Anmeldetag: 07.05.1999
(51) Int. Cl.: F02B 37/007, F02B 37/12

(54) **Verfahren zum Aufladen eines Verbrennungsmotors**
Method of supercharging an internal-combustion engine
Procédé de suralimentation d'un moteur à combustion interne

(30) Priorität: 22.05.1998 DE 19823014
(43) Veröffentlichungstag der Anmeldung: 24.11.1999
(73) Patentinhaber: Udo Mailänder GmbH, D-74321 Bietigheim-Bissingen (DE)
(72) Erfinder: Mailänder, Udo, 74321 Bietigheim-Bissingen (DE)
(74) Vertreter: Schiering, Hans, Dipl.-Ing.

(56) Entgegenhaltungen:
- DE-C- 4 434 777
- FR-A- 2 444 798

## Beschreibung

Die Erfindung betrifft ein Verfahren zum Aufladen eines Verbrennungsmotors, bei dem ein Ladeluftstrom durch ein von einer Folge von Betriebsbereichen des Verbrennungsmotors abhängiges Umschalten einer Ventileinrichtung auf unterschiedlich viele Zylinder der Zylinder des Verbrennungsmotors gelenkt wird und das Ladeluftaufkommen durch ein von einer Folge von Betriebsbereichen des Verbrennungsmotors abhängiges Hinzuschalten und Wiederabschalten wenigstens eines einen ersten Abgasturbolader in abgasseitiger Parallelanordnung ergänzenden Abgasturboladers verändert wird.

Durch die Zuhilfenahme der Aufladung läßt sich in einem kleinen Verbrennungsmotor die Leistung eines ansonsten erheblich größeren Verbrennungsmotors verwirklichen. Im Falle einer vorgegebenen Nennleistung kann der Motor aufgrund seiner Aufladung beträchtlich verkleinert werden. Bei der Aufladung von Verbrennungsmotoren mit Abgasturboladern ergibt sich der Zielkonflikt, daß einerseits durch die Aufladung eine Steigerung der Nennleistung ermöglicht wird und andererseits dazu die geometrisch-mechanische Verdichtung proportional zur gewünschten Nennleistungssteigerung herabgesetzt werden muß. Durch die Herabsetzung der geometrisch-mechanischen Verdichtung läßt aber die Leistung bzw. das Drehmoment des aufgeladenen Verbrennungsmotors im unteren Drehzahlbereich überproportional nach, was auf die bei Abgasturboladern sehr spitzige Leistungskurve in ihrem eigenen Betriebsdrehzahldiagramm zurückzuführen ist. Eine Strömungsmaschine kann nur innerhalb eines sehr schmalen Drehzahlbereichs eine optimale Strömung und damit eine hohe Leistung erbringen. Das ist das Gegenteil dessen, was man beim Verbrennungsmotor in Landfahrzeugen für die Darstellung einer Zugkrafthyperbel anstrebt. Durch den Einsatz mehrerer Abgasturbolader kann jedoch sowohl die Betriebsdrehzahlspanne des Verbrennungsmotors als auch die spezielle volumetrische Arbeitsgröße des Abgasturboladers aufgeteilt werden. Das demzufolge zeitlich versetzte Hinzuschalten der Abgasturbolader führt allerdings leicht das Aufladesystem in den Bereich des Pumpens und zum Zusammenbruch der Ladeluftströmung im hinzugeschalteten Verdichter, wenn beispielsweise die vom zweiten Verdichter mit sehr geringem Druck zunächst über ein Abblaseventil ins Freie strömende Luft in den bereits unter dem vollen Druck des ersten Verdichters stehenden Ladeluftsammler des Verbrennungsmotors gelangen soll, also von einer Strömungsmaschine mit relativ großer Strömungsgeschwindigkeit und geringer Druckaufbaumöglichkeit zu einer Kolbenmaschine mit relativ kleiner Strömungsgeschwindigkeit und relativ hoher Druckaufbaumöglichkeit.

Die eingangs angeführte Gattung eines Verfahrens zum Aufladen eines Verbrennungsmotors ist der vorbekannten Publikation DE 44 34 777 C1 zu entnehmen. Als abhängig von einer Folge von Betriebsbereichen des Verbrennungsmotors umschaltbare Ventileinrichtung zum Lenken des Ladeluftstroms auf unterschiedlich viele Zylinder der Zylinder des Verbrennungsmotors ist dort ein Ladeluftsammler mit zwei oder mehr in ihn eingefügten Ladelufttrennklappen vorgesehen. Diese Ladelufttrennklappen dienen der Zweiteilung des Ladeluftsammlers mit betriebsbereichsabhängig unterschiedlichem Teilungsverhältnis, wobei jeder von der Ladeluftversorgung abgetrennte Zylinder über den ladeluftfreien Teil des Ladeluftsammlers aus einem sämtlichen Zylindern zugeordneten Abgassammler mit Abgas beaufschlagt wird. Damit wird für einen aufgeladenen Mehrzylinder-Dieselmotor vorrangig ein vom Kaltstart bei sehr niedriger Umgebungslufttemperatur bis zur Vollast bei hoher Motordrehzahl und sehr hoher Umgebungslufttemperatur übergangsharmonisch beherrschtes Betriebsspektrum ermöglicht. Bei insgesamt vier Ladelufttrennklappen ist die den Ladeluftsammler am stärksten beschränkende Ladelufttrennklappe dem Kaltstart, die nächste Ladelufttrennklappe dem Start des warmen Motors, die übernächste Ladelufttrennklappe dem Leerlauf unter ca. 20°C Umgebungslufttemperatur und die den Ladeluftsammler am wenigsten beschränkende Ladelufttrennklappe dem Leerlauf über ca. 20°C Umgebungslufttemperatur zugeordnet. Außerdem ist einem ersten zuschaltbaren Abgasturbolader der Vollastbetrieb mit niedriger Drehzahl, einem zweiten zuschaltbaren Abgasturbolader der Vollastbetrieb mit mittlerer Drehzahl und einem dritten zuschaltbaren Abgasturbolader der Vollastbetrieb mit hoher Drehzahl zugeordnet. Auch bei diesem Schalten besteht die oben angeführte Gefahr des Pumpens, d.h. des Zurückströmens von Ladeluft, und des Zusammenbruchs der Ladeluftströmung.

Bei einer Kolben-Brennkraftmaschine nach der vorbekannten Publikation FR 2 444 798 A werden bei nur zwei vorhandenen Abgasturboladern insgesamt vier Ladeluftstufen mit Hilfe eines Ladeluftverteilventils geschaffen, das zwei Zylinderreihen im untersten Leistungsbereich allein aus dem ersten Abgasturbolader, dann gemeinsam aus einer ladeluftseitigen Serienschaltung der beiden Abgasturbolader, dann getrennt aus je einem der beiden Abgasturbolader und im obersten Leistungsbereich gemeinsam aus beiden Abgasturboladern mit Ladeluft versorgt. Innerhalb der beiden Zylinderreihen haben stets alle Zylinder dieselbe Ladeluftversorgung. Beim Wechsel in die Ladeluftstufen mit einer Verbindung der Ladeluftströme bestehen die Gefahren des Pumpens und damit ungünstigen gegenseitigen Beeinflussens der beiden Abgasturbolader fort.

Der Erfindung liegt die Aufgabe zugrunde, bei einem aufgeladenen Verbrennungsmotor in Verbindung mit einer Leistungssteigerung den Kraftstoffverbrauch und die Schadstoffemission zu senken, das Beschleunigungsverhalten im Niedrigdrehzahlbereich zu verbessern, ein übergangsharmonisches Betriebsspektrum von sehr niedriger Drehzahl bei Teillast und Vollast bis zu hoher Drehzahl bei Teillast und Vollast zu erzielen und ein problemloses zeitlich versetztes Hinzuschalten und Wiederabschalten wenigstens eines weiteren Abgasturboladers ohne einen Pumpeffekt oder einen Zusammenbruch der Ladeluftströmung zu ermöglichen.

Diese Aufgabe wird erfindungsgemäß mit einem Verfahren der eingangs angeführten Art dadurch gelöst, daß jeder Zylinder des Verbrennungsmotors immer, d.h. in allen Stellungen der Ventileinrichtung, nur von einem der Abgasturbolader mit Ladeluft versorgt wird und beim Hinzuschalten und Wiederabschalten des jeweils nächsten Abgasturboladers die Ladeluftversorgung eines Zylinders oder weniger Zylinder der insgesamt vorhandenen Zylinder vom Ladeluftstrom eines Abgasturboladers auf den Ladeluftstrom eines anderen Abgasturboladers umgestellt wird.

Im erfindungsgemäßen Verfahren zum Aufladen eines Verbrennungsmotors werden demnach die Ladeluftströme der einzelnen Abgasturbolader nicht wie gewöhnlich in einem Ladeluftsammler vereint, sondern bis zu den an den Zylindern des Verbrennungsmotors befindlichen Einlaßventilen stets voneinander getrennt gehalten. Bei alledem ist keiner der Zylinder des Verbrennungsmotors von der Ladeluftversorgung etwa zum Zwecke eines besseren Kaltstarts ausgenommen. Aufgrund der Getrennthaltung der Ladeluftströme kann sich der jeweils neue Ladeluftdruck in dem jeweils nächsten Abgasturbolader ohne Störung durch den bereits etablierten Ladeluftdruck des voraus betriebenen Abgasturboladers entwickeln. Als Ventileinrichtung zum Verteilen der voneinander getrennten Ladeluftströme auf die vorhandenen Zylinder des Verbrennungsmotors eignet sich ein elektrisch steuerbarer Registerladeluftverteiler, bei dem zwar wie bei einem Ladeluftsammler sämtliche Ladeluftströme in ein mit sämtlichen Zylindern verbundenes Behältnis einmünden, jedoch durch verschiebbare Kolben oder schwenkbare Klappen oder sonstige Trennventile sich ein oder mehr Zylinder an jeweils nur einen Abgasturbolader anschließen lassen. Die mit der Erfindung erzielten Vorteile bestehen aber insbesondere auch darin, daß das Betriebsspektrum des Verbrennungsmotors übergangsharmonischer unterteilbar ist. Hierzu wird als Verfeinerung nach dem Hinzuschalten und vor dem Wiederabschalten des nächsten Abgasturboladers zur Bildung eines weiteren Betriebsbereichs des Verbrennungsmotors die Ladeluftversorgung eines weiteren Zylinders oder weniger weiterer Zylinder der insgesamt vorhandenen Zylinder vom Ladeluftstrom eines Abgasturboladers auf den Ladeluftstrom eines anderen Abgasturboladers umgestellt.

Ein aufgrund der in den Unteransprüchen angegebenen Erfindungsausgestaltungen bevorzugtes Ausführungsbeispiel der Erfindung ist in der stark schematischen Zeichnung dargestellt und wird im folgenden näher beschrieben. Es zeigt
- Fig. 1: eine Vorrichtung zur Durchführung des Verfahrens mit einem hervorgehobenen Verfahrensschritt und
- Fig. 2: das Gesamtspektrum der Verfahrensschritte zu der speziellen Vorrichtung in Fig. 1.

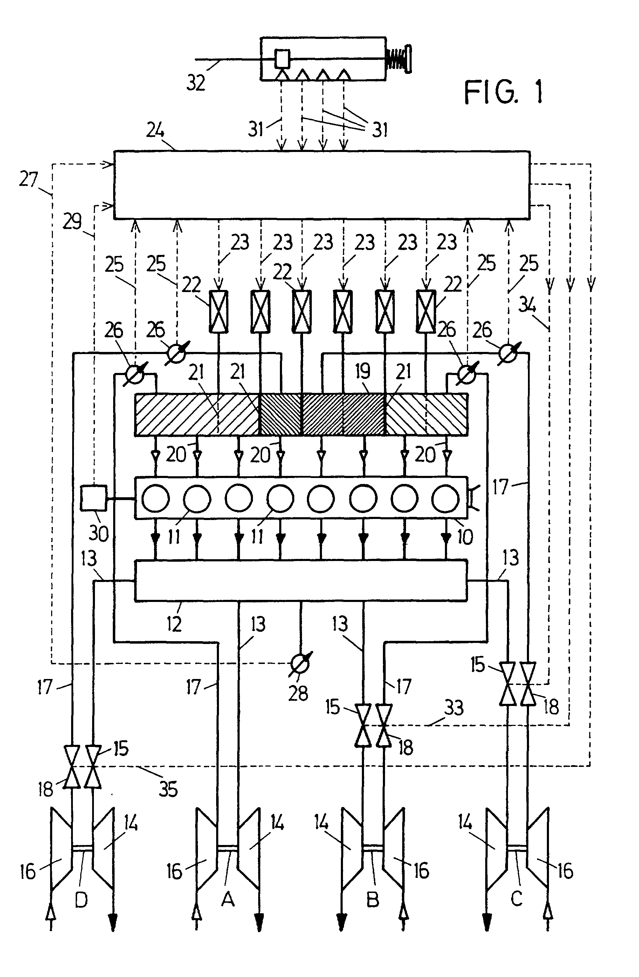

Im Zentrum von Fig. 1 befindet sich ein Verbrennungsmotor 10 mit acht Zylindern 11, deren Abgase in einem Abgassammler zusammenströmen. Von dem Abgassammler 12 führt je ein Abgasstrang 13 über die Turbine 14 eines von insgesamt vier Abgasturboladern A, B, C und D, bei den Abgasturboladern B, C und D unter Zwischenfügung eines Schaltventils 15 und beim Abgasturbolader A ohne ein solches Schaltventil 15. Die Verdichter 16 der vier Abgasturbolader A, B, C und D sind Bestandteil je eines Ladeluftstrangs 17, der bei den Abgasturboladern B, C und D ein Schaltventil 18 enthält und beim Abgasturbolader A kein derartiges Schaltventil 18 enthält.

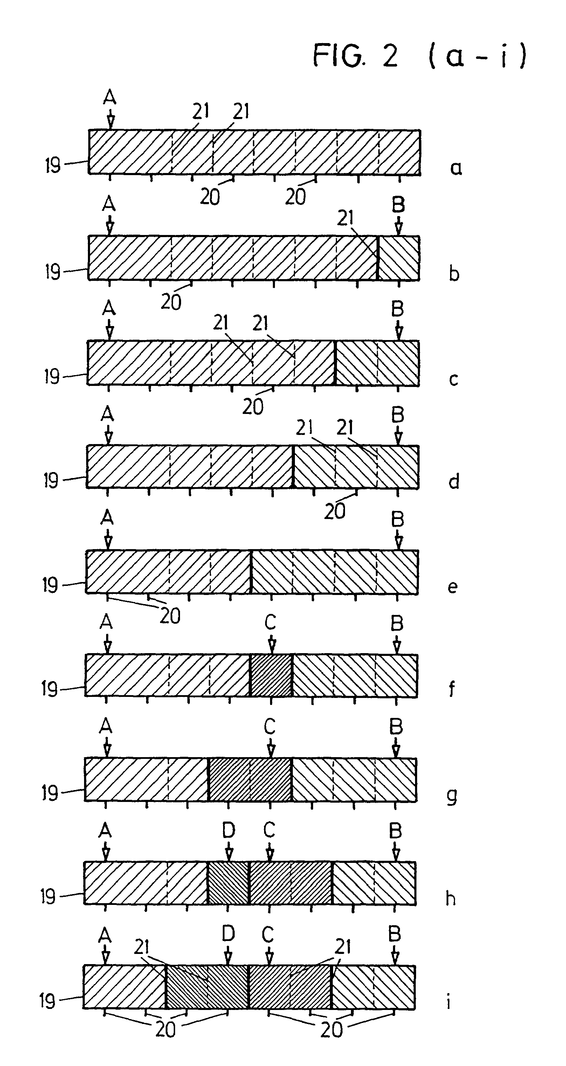

Die Ventileinrichtung 19 zum in Abhängigkeit von den Betriebsbereichen a bis i nach Fig. 2 unterschiedlichen Verteilen der in den Abgasturboladern A, B, C und D erzeugten maximal vier Ladeluftströme auf die acht Zylinder 11 des Verbrennungsmotors 10 ist als elektrisch steuerbarer Registerladeluftverteiler ausgebildet, bei dem zwar wie bei einem Ladeluftsammler sämtliche Ladeluftströme in ein mit sämtlichen Zylindern 11 verbundenes Behältnis einmünden, jedoch durch bis auf eine Ausnahme zwischen den acht Zylinderanschlüssen 20 eingefügte Trennklappen 21 Teilräume für die Getrennthaltung der in wechselnder Zahl aufgebotenen Ladeluftströme geschaffen werden. In Fig. 2 sind die individuellen Raumteilungen sämtlicher Betriebsbereiche a bis i des Verbrennungsmotors 10 tabellenartig zusammengestellt, die geschlossenen Trennklappen 21 durch ausgezogene Linien wiedergegeben, die geöffneten Trennklappen 21 durch gestrichelte Linien angedeutet und die voneinander getrennt gehaltenen Ladeluftströme der vier Abgasturbolader A, B, C und D durch unterschiedliche Schraffuren kenntlich gemacht. Die Darstellung der Ventileinrichtung 19 im komplexesten Betriebsbereich h des Verbrennungsmotors 10 ist aus Fig. 2 in Fig. 1 übernommen.

Die Betätigungseinrichtungen 22 der sechs vorgesehenen Trennklappen 21 sind über je eine Steuerleitung 23 mit einem Rechner 24 verbunden, durch den ihm zugeführte Meßwerte vorzugsweise über den Vergleich mit digital abgespeicherten Schaltprofilen mittelbar zum Schalten der Ventileinrichtung 19 sowie der Abgasturbolader B, C und D verwendet sind. Als Meßwerte kommen in mannigfaltigen Kombinationen die von den Abgasturboladern A, B, C und D gelieferten Ladeluftdrücke, der im Abgassammler 12 herrschende Abgasdruck, die Drehzahl des Verbrennungsmotors 10 und beispielsweise in Form von Gaspedalstellungen Lastanforderungswerte in Betracht. Zur Veranschaulichung dieser Möglichkeiten führt in Fig. 1 zum Rechner 24 je eine Signalleitung 25 von jedem der vier Manometer 26 in den Ladeluftsträngen 17, eine Signalleitung 27 von einem am Abgassammler 12 installierten weiteren Manometer 28, die Signalleitung 29 eines an die Welle des Verbrennungsmotors 10 angeschlossenen Drehzahlmessers 30 und je eine Signalleitung 31 von vier Wegepositionen am Gaspedal 32 des Verbrennungsmotors 10. Vom Rechner 24 führt noch eine Steuerleitung 33 zu den beiden Schaltventilen 15 und 18 des Abgasturboladers B, eine Steuerleitung 34 zu den beiden Schaltventilen 15 und 18 des Abgasturboladers C und eine Steuerleitung 35 zu den beiden Schaltventilen 15 und 18 des Abgasturboladers D.

Die vier in etwa gleich großen Abgasturbolader A, B, C und D werden, auf das Betriebsdrehzahldiagramm des Verbrennungsmotors 10 bezogen, gleichmäßig verteilt und bei Vollast zuschaltbar ausgelegt. Ihre singuläre Arbeitsgröße entspricht, korrelierend mit ihrer Gesamtzahl, ungefähr einem Viertel des maximalen Abgas- und Ladeluftdurchsatzes des Verbrennungsmotors 10 bei Vollast und Höchstdrehzahl. Die vier in etwa gleich großen Abgasturbolader A, B, C und D sind deshalb mit ihrer Bestleistung jeweils bei den Betriebsdrehzahldiagrammpunkten 25%, 50%, 75% und 100% der Höchstdrehzahl bei Vollast angesiedelt, um einen möglichst frühzeitigen Einsatz bzw. Bestleistungspunkt des ohne Schaltventile 15 und 18 arbeitenden ersten Abgasturboladers A zu bekommen und außerdem die Abstände zwischen den Bestleistungspunkten der Abgasturbolader A, B, C und D und dem Nullpunkt in ungefähr gleicher Größe zu haben.

In der Ausgangsstellung der als elektrisch steuerbarer Registerladeluftverteiler ausgebildeten Ventileinrichtung 19 und im untersten Betriebsbereich a des Verbrennungsmotors 10 sind alle sechs Trennklappen 21 geöffnet, so daß alle acht Zylinder 11 einen Zugang zum Ladeluftstrom des Abgasturboladers A haben. Der erste Abgasturbolader A hat weder abgasseitig noch ladeluftseitig eine Absperreinrichtung und arbeitet deshalb vom Start des Verbrennungsmotors 10 an über die gesamte Betriebsdrehzahlspanne des Verbrennungsmotors 10 hinweg. Wird bei Vollast in etwa ein Viertel der Betriebsdrehzahlspanne erreicht, so trennt die sechste Trennklappe 21 vor dem achten Zylinder 11 eine Kammer ab, die im Betriebsbereich b des Verbrennungsmotors 10 mit Ladeluft erstmals aus dem Abgasturbolader B beschickt wird. Erreicht dieser Ladeluftdruck mit einem kleinen Sicherheitsabstand das Niveau des Abgasturboladers A, wird die fünfte Trennklappe 21 geschlossen und die sechste Trennklappe 21 wieder geöffnet, so daß der Abgasturbolader A im Betriebsbereich c des Verbrennungsmotors 10 nur noch die ersten sechs Zylinder 11 und der Abgasturbolader B jetzt die letzten zwei Zylinder 11 bedient. Wieder muß dann der Ladeluftdruck des Abgasturboladers B ungefähr den Wert des Abgasturboladers A erreichen, um einen Schaltvorgang auszulösen, wobei diesmal für den Betriebsbereich d des Verbrennungsmotors 10 die vierte Trennklappe 21 geschlossen wird und kurz danach die fünfte Trennklappe 21 wieder geöffnet wird. Das wiederholt sich noch einmal mit der dritten und der vierten Trennklappe 21, so daß danach im Betriebsbereich e des Verbrennungsmotors 10 je vier Zylinder 11 von den beiden Abgasturboladern A und B bedient werden.

Im Betriebsbereich f des Verbrennungsmotors 10 kommt erstmals der Abgasturbolader C zum Einsatz, wobei die dritte Trennklappe 21 geschlossen bleibt und die vierte Trennklappe 21 zusätzlich geschlossen wird, um dem Abgasturbolader C ein ungestörtes Hochlaufen zu ermöglichen. Nachdem wieder das Ladedruckniveau des Abgasturboladers A mit dem gewissen Abstand erreicht ist, schließt sich diesmal die zweite Trennklappe 21 und öffnet sich kurz danach die dritte Trennklappe 21 zum Betriebsbereich g des Verbrennungsmotors 10. Wenn wieder ein Gleichdruck erreicht ist, schließt sich die fünfte Trennklappe 21 und öffnet sich die vierte Trennklappe 21. Ist wiederum Gleichdruck vorhanden, so schließt sich die dritte Trennklappe 21 und es entsteht zum Betriebsbereich h des Verbrennungsmotors 10 die erste Kammer für den Abgasturbolader D im Bereich des vierten Zylinders 11. Nach dem Gleichdrucksignal schließt sich die erste Trennklappe 21 und öffnet die zweite Trennklappe 21 zum Betriebsbereich i des Verbrennungsmotors 10. Jetzt sind alle vier Abgasturbolader A, B, C und D am Aufladeprozeß beteiligt, und erst das Absinken des Leitdrucks aus dem Abgasturbolader A unter ein vorgegebenes Niveau gibt das Signal für den Rückwärtsschaltprozeß vom Betriebsbereich i abwärts bis zum Betriebsbereich a. Da die Rücknahme einer Motorleistung viel schneller und einfacher vorsichgeht und gehen muß als der Leistungsaufbau, wird hierbei im wesentlichen der direkte Weg zum Anfangspunkt bzw. zur Startphase gewählt. Dies geschieht, indem bei Leistungsbedarfsende sofort und ohne Zwischenschritte alle sechs Trennklappen 21 geöffnet werden, soweit nicht einzelne schon geöffnet sind.

Der stufenweise Rückweg vom obersten Betriebsbereich i oder anderen aufwärts erreichten Betriebsbereich des Verbrennungsmotors 10 erfolgt im Prinzip in genau umgekehrter Reihenfolge wie die Schaltvorgänge nach oben. Ausgehend vom Betriebsbereich i wird die zweite Trennklappe 21 geschlossen und danach die erste Trennklappe 21 geöffnet. Dann wird der Abgasturbolader D abgeschaltet und die dritte Trennklappe 21 geöffnet. Danach wird die vierte Trennklappe 21 geschlossen und die fünfte Trennklappe 21 geöffnet, wodurch der Betriebsbereich g erreicht ist. Danach wird die dritte Trennklappe 21 geschlossen und die zweite Trennklappe 21 geöffnet. Jetzt wird der Abgasturbolader C abgeschaltet. Danach wird die vierte Trennklappe 21 geöffnet, wodurch der Betriebsbereich e erreicht ist. Danach wird bei Bedarf die vierte Trennklappe 21 geschlossen und die dritte Trennklappe 21 geöffnet. Wiederum danach wird die fünfte Trennklappe 21 geschlossen und die vierte Trennklappe 21 geöffnet. Sodann wird die sechste Trennklappe 21 geschlossen und die fünfte Trennklappe 21 geöffnet. Schließlich wird der Abgasturbolader B abgeschaltet und danach auch die sechste Trennklappe 21 geöffnet.

Durch Fig. 2 wird verdeutlicht, daß nach dem Hinzuschalten und vor dem Wiederabschalten des nächsten Abgasturboladers B bzw. C bzw. D zur Bildung eines weiteren Betriebsbereichs c oder d oder e bzw. g bzw. i des Verbrennungsmotors 10 die Ladeluftversorgung eines weiteren Zylinders 11 vom Ladeluftstrom eines Abgasturboladers auf den Ladeluftstrom eines anderen Abgasturboladers umgestellt wird. Ob man dies zeitgleich für mehr als einen Zylinder 11 tut, ist eine Frage der Zylinderzahl des Verbrennungsmotors 10 und beispielsweise auch eine Frage der Differenzierung des Hochfahrens und des Herunterfahrens des Verbrennungsmotors 10. In jedem Fall ergibt sich durch diese Maßnahme eine noch feinere Unterteilung des Betriebsspektrums des Verbrennungsmotors 10 in eine größere Anzahl von Betriebsbereichen ohne eine gegenseitige Störung der getrennt gehaltenen Ladeluftströme.

Eine besonders vorteilhafte Unterteilung des Betriebsspektrums des Verbrennungsmotors 10 besteht darin, daß sich der mit dem Hinzuschalten des dritten Abgasturboladers C beginnende Betriebsbereich f an den Betriebsbereich e mit einer zahlenmäßig hälftigen Aufteilung der acht Zylinder 11 auf den ersten Abgasturbolader A und den zweiten Abgasturbolader B anschließt. Damit erhält man eine feine Abstaffelung in Betriebsbereiche dort, wo der Verbrennungsmotor 10 ganz überwiegend betrieben wird und die höherrangigen Abgasturbolader C und D noch nicht erforderlich sind. Die gleich hohe Ladeluftanforderung an die beiden Abgasturbolader A und B im Betriebsbereich e des Verbrennungsmotors 10 begünstigt die Verwendung baulich und leistungsmäßig übereinstimmender Typen. Dies gilt insbesondere auch dafür, daß im obersten Betriebsbereich i des Verbrennungsmotors 10 jeder der insgesamt vorgesehenen Abgasturbolader A, B, C und D gleich viele Zylinder 11 allein mit Ladeluft versorgt. Demzufolge ist stets ein ganzzahliges Verhältnis in der Anzahl der Zylinder 11 des Verbrennungsmotors 10 zu der Anzahl der vorgesehenen Abgasturbolader anzustreben.

Zur weiteren Begünstigung einer übergangsharmonischen Unterteilung des Betriebsspektrums des Verbrennungsmotors 10 ist der Drehzahlbereich des Verbrennungsmotors 10 bei Vollast durch die betreffenden Stellungen der Ventileinrichtung 19 entsprechend der Gesamtzahl der Abgasturbolader in etwa gleichmäßig aufgeteilt und ist durch die Zwischenstellungen der Ventileinrichtung 19 jeweils eine in etwa gleichmäßige Zwischenunterteilung dieser Drehzahlteilbereiche vorgenommen. Vorzugsweise wird die der Folge von Betriebsbereichen a bis i des Verbrennungsmotors 10 zugeordnete Folge unterschiedlicher Stellungen der den Zylindern 11 des Verbrennungsmotors 10 vorgeordneten Ventileinrichtung 19 von den Meßwertkombinationen der den Abgasturboladern A, B, C und D zugeordneten Ladedruckmesser 26 und des allen Zylindern 11 gemeinsamen Abgasdruckmessers 28 gesteuert, weil hierbei die Meßwerte in einem engen Zusammenhang zum Regelergebnis stehen und einfache Manometer als Meßgeräte ausreichen. Es steht einem jedoch frei, alternativ oder in Kombination zum gleichen Zweck Meßwerte eines an die Welle des Verbrennungsmotors 10 angeschlossenen Drehzahlmessers 30 und Lastanforderungswerte vom Gaspedal 32 des Verbrennungsmotors 10 heranzuziehen.

## Patentansprüche

1. Verfahren zum Aufladen eines Verbrennungsmotors, bei dem ein Ladeluftstrom durch ein von einer Folge von Betriebsbereichen des Verbrennungsmotors (10) abhängiges Umschalten einer Ventileinrichtung (19) auf unterschiedlich viele Zylinder der Zylinder (11) des Verbrennungsmotors (10) gelenkt wird und das Ladeluftaufkommen durch ein von einer Folge von Betriebsbereichen des Verbrennungsmotors (10) abhängiges Hinzuschalten und Wiederabschalten wenigstens eines einen ersten Abgasturbolader (A) in abgasseitiger Parallelanordnung ergänzenden Abgasturboladers (B) verändert wird, **dadurch gekennzeichnet, daß** jeder Zylinder (11) des Verbrennungsmotors (10) immer, d.h. in allen Stellungen der Ventileinrichtung (19), nur von einem der Abgasturbolader (A, B, C, D) mit Ladeluft versorgt wird und beim Hinzuschalten und Wiederabschalten des jeweils nächsten Abgasturboladers die Ladeluftversorgung eines Zylinders (11) oder weniger Zylinder (11) der insgesamt vorhandenen Zylinder (11) vom Ladeluftstrom eines Abgasturboladers auf den Ladeluftstrom eines anderen Abgasturboladers umgestellt wird.

2. Verfahren nach Anspruch 1, **dadurch gekennzeichnet, daß** nach dem Hinzuschalten und vor dem Wiederabschalten des nächsten Abgasturboladers (B, C, D) zur Bildung eines weiteren Betriebsbereichs (c, d, e, g, i) des Verbrennungsmotors (10) die Ladeluftversorgung eines weiteren Zylinders (11) oder weniger weiterer Zylinder (11) der insgesamt vorhandenen Zylinder (11) vom Ladeluftstrom eines Abgasturboladers auf den Ladeluftstrom eines anderen Abgasturboladers umgestellt wird.

3. Verfahren nach Anspruch 2, **dadurch gekennzeichnet, daß** sich der mit dem Hinzuschalten eines dritten Abgasturboladers (C) beginnende Betriebsbereich (f) an einen Betriebsbereich (e) mit einer zahlenmäßig hälftigen Aufteilung der Zylinder (11) auf den ersten Abgasturbolader (A) und den zweiten Abgasturbolader (B) anschließt.

4. Verfahren nach Anspruch 2 oder 3, **dadurch gekennzeichnet, daß** im obersten Betriebsbereich (i) des Verbrennungsmotors (10) jeder der insgesamt vorgesehenen Abgasturbolader gleich viele Zylinder (11) allein mit Ladeluft versorgt.

5. Verfahren nach einem der Ansprüche 2 bis 4, **dadurch gekennzeichnet, daß** der Drehzahlbereich des Verbrennungsmotors (10) bei Vollast durch die betreffenden Stellungen der Ventileinrichtung (19) entsprechend der Gesamtzahl der Abgasturbolader in etwa gleichmäßig aufgeteilt ist und durch die Zwischenstellungen der Ventileinrichtung (19) jeweils eine in etwa gleichmäßige Zwischenunterteilung dieser Drehzahlteilbereiche vorgenommen ist.

6. Verfahren nach einem der Ansprüche 1 bis 4, **dadurch gekennzeichnet, daß** die der Folge von Betriebsbereichen (a bis i) des Verbrennungsmotors (10) zugeordnete Folge unterschiedlicher Stellungen der den Zylindern (11) des Verbrennungsmotors (10) vorgeordneten Ventileinrichtung (19) von den Meßwertkombinationen den Abgasturboladern (A, B, C, D) zugeordneter Ladedruckmesser (26) und eines allen Zylindern (11) gemeinsamen Abgasdruckmessers (28) gesteuert wird.

7. Verfahren nach Anspruch 5 oder 6, **dadurch gekennzeichnet, daß** sämtliche Meßwerte über den Vergleich mit in einem Rechner (24) digital abgespeicherten Schaltprofilen mittelbar zum Schalten der Ventileinrichtung (19) sowie der Abgasturbolader (B ,C ,D) verwendet sind.

## Claims

1. A method of charging an internal-combustion engine, in which a charge-air flow is directed to differing numbers of the cylinders (11) of the internal-combustion engine (10) by switching over a valve device (19) in a manner dependent upon a sequence of operating ranges of the internal-combustion engine (10), and the arrival of the charge air is varied by switching on and off again - in a manner dependent upon a sequence of operating ranges of the internal-combustion engine (10) - at least one exhaust-gas turbocharger (**B**) complementing a first exhaust-gas turbocharger (**A**) in a parallel arrangement on the exhaust-gas side, **characterized in that** each cylinder (11) of the internal-combustion engine (10) is always, *i.e.* in all settings of the valve device (19), supplied with charge air only by one of the exhaust-gas turbochargers (**A, B, C, D**) and when the respectively next exhaust-gas turbocharger is switched on and off again the charge-air supply of a cylinder (11) or a few cylinders (11) of the cylinders (11) present as a whole is re-set from the charge-air flow of one exhaust-gas turbocharger to the charge-air flow of another exhaust-gas turbocharger.

2. A method according to Claim 1, **characterized in that** after the next exhaust-gas turbocharger (**B, C, D**) has been switched on and before it has been switched off again in order to form a further operating range (**c, d, e, g, i**) of the internal-combustion engine (10) the charge-air supply of a further cylinder (11) or a few further cylinders (11) of the cylinders (11) present as a whole is re-set from the charge-air flow of one exhaust-gas turbocharger to the charge-air flow of another exhaust-gas turbocharger.

3. A method according to Claim 2, **characterized in that** the operating range (**f**) beginning with switching on a third exhaust-gas turbocharger **(C)** follows on from an operating range (**e**) with a numerically halved distribution of the cylinders (11) onto the first exhaust-gas turbocharger (**A**) and the second exhaust-gas turbocharger (**B**).

4. A method according to Claim 2 or 3, **characterized in that** in the topmost operating range (**i**) of the internal-combustion engine (10) each of the exhaust-gas turbochargers provided as a whole supplies an equal number of cylinders (11) with charge air alone.

5. A method according to one of Claims 2 to 4, **characterized in that** the rotational-speed range of the internal-combustion engine (10) at full load is distributed substantially uniformly by the respective settings of the valve device (19) in accordance with the total number of the exhaust-gas turbochargers, and a substantially uniform intermediate distribution of the said rotational-speed ranges is carried out by the intermediate settings of the valve device (19).

6. A method according to one of Claims 1 to 4, **characterized in that** the sequence - associated with the sequence of operating ranges (**a** to **i**) of the internal-combustion engine (10) - of different settings of the valve device (19) arranged upstream of the cylinders (11) of the internal-combustion engine (10) is controlled by the measurement-value combinations of charge-pressure gauges (26) associated with the exhaust-gas turbochargers (**A, B, C, D**) and an exhaust-gas-pressure gauge (28) common to all the cylinders (11).

7. A method according to Claim 5 or 6, **characterized in that** all the measurement values are used in an indirect manner for switching the valve device (19) and the exhaust-gas turbochargers **(B, C, D)** by way of comparison with switching profiles stored digitally in a computer (24).

## Revendications

1. Procédé pour suralimenter un moteur thermique pour lequel un flux d'air de suralimentation est guidé par une inversion d'une installation de soupapes (19) - qui dépend d'une succession de plages de fonctionnement du moteur thermique (10) - sur un grand nombre de cylindres différents parmi les cylindres (11) du moteur thermique (10) et pour lequel l'arrivée d'air de suralimentation est modifiée par une connexion supplémentaire d'une installation de soupapes qui dépend d'une succession de plages de fonctionnement du moteur thermique (10) puis par une nouvelle déconnexion d'au moins un turbocompresseur à gaz d'échappement (B) qui complète un premier turbocompresseur à gaz d'échappement (A) disposé en parallèle du côté des gaz d'échappement,
**caractérisé en ce que** chaque cylindre (11) du moteur thermique (10) est toujours, c'est-à-dire dans toutes les positions de l'installation de soupapes (19), alimenté en air de suralimentation par un seul des turbocompresseurs à gaz d'échappement (A, B, C, D) et, lors de la connexion supplémentaire et de la déconnexion du turbocompresseur à gaz d'échappement suivant, l'alimentation en air de suralimentation d'un cylindre (11) ou de peu de cylindres (11) parmi les cylindres (11) existants au total passe du courant d'air de suralimentation d'un turbocompresseur à gaz d'échappement au courant d'air de suralimentation d'un autre turbocompresseur à gaz d'échappement.

2. Procédé selon la revendication 1 **caractérisé en ce que**, après la connexion supplémentaire et avant la déconnexion du turbocompresseur à gaz d'échappement suivant (B, C, D) pour former une autre plage de fonctionnement (c, d, e, g, i) du moteur thermique (10), l'alimentation en air de suralimentation d'un autre cylindre (11) ou d'un nombre restreint d'autres cylindres (11) parmi les cylindres (11) présents au total passe du courant d'air de suralimentation d'un turbocompresseur à gaz d'échappement au courant d'air de suralimentation d'un autre turbocompresseur à gaz d'échappement.

3. Procédé selon la revendication 2 **caractérisé en ce que** la plage de fonctionnement (f) qui commence avec la connexion d'un troisième turbocompresseur à gaz d'échappement (C) se raccorde à une plage de fonctionnement (e) avec une répartition par moitié quant au nombre des cylindres (11) sur le premier turbocompresseur à gaz d'échappement (A) et sur le deuxième turbocompresseur à gaz d'échappement (B).

4. Procédé selon la revendication 2 ou 3 **caractérisé en ce que** chacun des turbocompresseurs à gaz d'échappement prévus au total alimente exclusivement en air de suralimentation autant de cylindres dans la plage de fonctionnement supérieure (i) du moteur thermique (10).

5. Procédé selon l'une des revendications 2 à 4 **caractérisé en ce que** la plage de régime du moteur thermique (10) à pleine charge est répartie à peu près régulièrement par les positions concernées de l'installation de soupapes (19) en fonction du nombre total des turbocompresseurs à gaz d'échappement et qu'on réalise à chaque fois une division intermédiaire à peu près régulière de cette plage de régime par les positions intermédiaires de l'installation de soupapes (19).

6. Procédé selon l'une des revendications 1 à 4 **caractérisé en ce que** la succession - associée à la succession de plages de fonctionnement (a à i) du moteur thermique (10) - de différentes positions de l'installation de soupapes (19) située en amont des cylindres (11) du moteur thermique (10) est de préférence commandée par les combinaisons de valeurs de mesure des manomètres d'admission (26) associés aux turbocompresseurs à gaz d'échappement (A, B, C et D) et d'un manomètre de gaz d'échappement (28) commun à tous les cylindres (11).

7. Procédé selon la revendication 5 ou 6 **caractérisé en ce que** toutes les valeurs de mesure sont utilisées indirectement pour connecter l'installation de soupapes (19) ainsi que les turbocompresseurs à gaz d'échappement (B, C, D) par comparaison avec des profils de connexion mémorisés sous forme numérique dans un ordinateur (24).
